**Europäisches Patentamt**

**European Patent Office**

**Office européen des brevets**

(19)

(11) Veröffentlichungsnummer: **0 000 590**
**B1**

(12) **EUROPÄISCHE PATENTSCHRIFT**

(45) Veröffentlichungstag der Patentschrift: **14.10.81**

(21) Anmeldenummer: **78100561.6**

(22) Anmeldetag: **01.08.78**

(51) Int. Cl.³: **C 08 F 214/06** //C09J3/14, C09D3/74, C04B7/35, (C08F214/06, 218/08, 210/02)

(54) **Wässrige Vinylchlorid-Copolymerdispersionen, deren Herstellung und Verwendung.**

(30) Priorität: **01.08.77 DE 2734656**

(43) Veröffentlichungstag der Anmeldung:
**07.02.79 Patentblatt 79/3**

(45) Bekanntmachung des Hinweises auf die Patenterteilung:
**14.10.81 Patentblatt 81/41**

(84) Benannte Vertragsstaaten:
**BE DE FR GB NL**

(56) Entgegenhaltungen:
**FR - A - 2 219 184**
**FR - A - 2 324 655**

(73) Patentinhaber: **WACKER-CHEMIE GMBH**
**Prinzregentenstrasse 22**
**D-8000 München 22 (DE)**

(72) Erfinder: **Eck, Herbert, Dr.**
**Burg 17**
**D-8263 Burghausen (DE)**
Erfinder: **Kemenater, Christof, Dr.**
**Marienberger Strasse 66**
**D-8263 Burghausen (DE)**
Erfinder: **Hannebaum, Manfred**
**Immanuel-Kant-Strasse 49a**
**D-8263 Burghausen (DE)**
Erfinder: **Kaiser, Wilhelm**
**Stadtplatz 50**
**D-8263 Burghausen (DE)**

Courier Press, Leamington Spa, England.

# 0 000 590

Wäßrige Vinylchlorid-Copolymerdispersionen, deren Herstellung und Verwendung

Die Erfindung bezieht sich auf wäßrige Copolymerdispersionen mit hohen Anteilen an Vinylchlorideinheiten in Polymeren, die lediglich Polyvinylalkohol als Schutzkolloid enthalten, deren Herstellung und deren Verwendung.

Wäßrige Copolymerdispersionen, die Vinylchlorid-, Vinlacetat- und Äthyleneinheiten enthalten, sind aus DE - A - 21 19 549 und 22 52 285 bekannt. Zur Erzielung stabiler Dispersionen war es bisher stets notwendig, besondere Maßnahmen hinsichtlich des Schutzkolloid/Emulgatorsystems zu ergreifen. Weiterhin war es oft unabdingbar, kritische Mengen ionischer oder auch nicht-ionischer Emulgatoren einzuhalten. Diese speziellen Kolloidstabilisierungssysteme aus Emulgatoren, Schutzkolloiden und Hilfsmonomeren sind nicht nur unter relativ komplizierten technischen Bedingungen reproduzierbar einzuhalten, sondern wirken sich manchmal auch bei verschiedenen Verwendungszwecken der Dispersionen, wie beispielsweise in Klebstoffen oder Betonzusatzmitteln, nachteilig aus. Hilfsmonomere- bzw. emulgatorhaltige Klebstoffe haben im allgemeinen geringere Wasserfestigkeiten. Ältere veröffentlichte Anmeldungen, wie beispielsweise die deutsche Patentanmeldung F 15 300 IV b/39c, beschreiben die Herstellung thermostabiler Polymerisate oder Mischpolymerisate von Vinylchlorid. Allerdings wird dort als erfindungsspezifisch herausgestellt, daß die Polymerisation bzw. Copolymerisation auf keinen Fall bis zum weitgehenden Verbrauch der Monomeren, Vinylchlorid bzw. Vinylacetat geführt werden darf.

Die FR—A—23 24 655 schlägt Dispersionen aus Äthylen-Vinylester-Vinylchlorid-Methacrylester-Copolymerisaten vor, die insbesondere aufgrund ihrer spezifischen Zusammensetzung Filme hoher Verseifungs- und Wetterbeständigkeit ergeben sollen.

Auch bei der Herstellung dieser Copolymerisatdispersionen müssen Emulgatoren und gegebenenfalls Monomere mit stark polaren Gruppen verwendet werden, da andernfalls, insbesondere bei alleiniger Verwendung von Schutzkolloid, stark rheopexe, sich stark absetzende Copolymerdispersionen entstehen, die stippige, trübe Aufstriche ergeben.

Aufgabe der Erfindung war es, Copolymerdispersionen zu finden, die ohne Hilfsmonomere, d. h. ohne Monomeren mit stark polaren Gruppen, wie z.B. von Carboxyl-, Sulfonsäure, Carbonamidgruppen bzw. Emulgatoren in wirtschaftlicher Weise zu stabilen Dispersionen zu polymerisieren sind.

Gegenstand der Erfindung sind wäßrige Vinylchlorid-Copolymer-dispersionen mit Feststoffgehalten zwischen 30 und 70 Gewichtsprozent, enthaltend Copolymere aus

50—85 Gewichtsprozent Vinylchlorideinheiten

5—35 Gewichtsprozent Vinylacetateinheiten und

5—30 Gewichtsprozent Äthyleneinheiten,

die dadurch gekennzeichnet sind, daß die Dispersion Schutzkolloid

2—15 Gewichtsprozent eines oder mehrerer Polyvinylalkohole, bezogen auf die Dispersion, mit Verseifungszahlen zwischen 20 und 240 und Polymerisationsgraden zwischen 300 und 200 enthält und daß die Copolymeren in Abwesenheit von Emulgatoren und Monomeren mit stark polaren Gruppen hergestellt worden sind.

Für bestimmte Verwendungswecke der Dispersionen, z. B. in manchen Klebstoffen und Anstrichmitteln, ist es vorteilhaft, zusätzlich 0,5 bis 5 Gewichtsprozent Einheiten olefinisch ungesättigter N-Methylolamide einzupolymerisieren.

Die genannten Harzzusammensetzungen stellen Grenzbereiche dar, in manchen Fällen mag es von Vorteil sein, Copolymerdispersionen mit Zusammensetzungen von 60 bis 80 Gewichtsprozent Vinylchlorideinheiten, 8 bis 20 Gewichtsprozent Vinylacetateinheiten und 10 bis 25 Gewichtsprozent Äthyleneinheiten und 0,5 bis 5 Gewichtsprozent an Einheiten olefinisch ungesättigter N-Methylolamide anzustreben.

Olefinisch ungesättigte N-Methylolamide sind beispielsweise N-Methylolacrylamid; N-Methylolmethacrylamid; N-Methylolallylcarbamat; N-Methylolallyläther, Mannich-Basen, N-Methylolester von N-Methylolacrylamid; N-Methylolmethacrylamid oder N-Methylolallylcarbamat.

Die Dispersionen werden in beheiz- und kühlbaren Rührautoklaven hergestellt. Dazu wird die erforderliche Polyvinylalkoholmenge, 2 bis 15 Gewichtsprozent, vorzugsweise 4,5 bis 12 Gewichtsprozent, bezogen auf die Dispersion, mit Verseifungszahlen zwischen 20 und 240 und 300 bis 2000 Monomereinheiten im Polymermolekül, gelöst in Wasser, vorgelegt. Dabei kann eine Polyvinylalkoholtype allein, aber auch Gemische verschiedener Polyvinylalkohole zur Anwendung kommen. Die Polymerisation wird Imallgemeinem mit Redoxkatalysatormengen zwischen 0,01 und 3 Gewichtsprozent durchgeführt. Im allgemeinen legt man die gesamte benötigte Menge des oxidierend wirkenden Katalysatoranteils, bzw. dessen Hauptmenge, vor und steuert die Polymerisation durch Zudosierung des Reduktionsmittels. Es kann jedoch auch in bekannter Weise das Reduktionsmittel vorgelegt werden und die Reaktion mit dem Oxidationsmittel gesteuert werden. Schließlich ist auch die Steuerung der Polymerisation durch gleichzeitiges Zudosieren beider Komponenten möliche. Man benötigt 0,01—0,5 Gewichtsprozent, vorzugsweise 0,03—0,3 Gewichtsprozent an Reduktionsmittel und 0,01—2 Gewichtsprozent, vorzugsweise 0,03—0,8 Gewichtsprozent an Oxidationsmittel, wobei je nach Verfahren das Verhältnis von Oxidationsmittel zu Reduktionsmittel 0,15 bis 6 beträgt. Beispiele für die oxidierend wirkende Komponente des Katalysators sind Ammonium- oder Kaliumpersulfat, Wasserstoffperoxid und t-Butylhydroperoxid. Beispiele für die Reduktionsmittelkomponente sind Natriumsulfit, Natriummetabisulfit, Zink- oder Natriumformaldehydsulfoxylat. Ebenso eignen sich $H_2$/Edelmetallsolkatalysatoren unter gleichzeitiger Verwendung geringer Mengen von Schwermetallsalzen als Aktivatoren. Geeignete Redoxkatalysatorsysteme sind u.a. in "Fundamental Principles of Polymerization", G.F. D'Alelio, John Wiley & Sons Inc., New York 1952 auf den Seiten 333 ff beschrieben.

Vor Polymerisationsbeginn werden gewöhnlich 10 bis 20 Gewichtsprozent der Gesamtmenge Vinylchlorid und Vinylacetat in die Polyvinylalkohollösung eindosiert und der Polymerisationsansatz mit Äthylen gesättigt. Dabei wird der Polymerisationsansatz gerührt. Der Polyvinylalkohol kann ganz oder nur teilweise, d.h. beispielsweise zur Hälfte, vorgelegt werden. Die Monomerkonzentration der flüssigen Monomeren sill während der Monomerdosierung 5 Gewichtsprozent nicht unter- und 20 Gewichtsprozent nicht überschreiten.

Der angewandte Äthylendruck schwankt, je nach der Äthylenmenge, die eingebaut werden soll, zwischen 20 und 150 bar. Der vorzugsweise benutzte Druckbereich ist 35 bis 100 bar. Der erforderliche Druck ist stark von der Viskosität und dem Rühreffekt im Polymerisationsansatz abhängig. Je niedriger die Viskosität und je besser die Stoffumwälzung im Autoklaven ist, desto weniger Athylendruck ist zum Einbau der gewünschten Menge Äthylen is das Harz, natürlich unter Berücksichtigung der Copolymerisations- und Löslichkeitsparameter, erforderlich.

Die Polymerisationstemperatur beträgt 10 bis 85°C, vorzugsweise 20 bis 50°C. Im Verlauf der Reaktion wird das restliche Vinylchlorid und Vinylacetat sowie die 0,5 bis 5 Gewichtsprozent der olefinischen ungesättigten N-Methylolamide, deren Methylolgruppe auch veräthert sein kann, dem Reaktionsgefäß zugeführt, wobei der Äthylendruck konstant gehalten wird.

Die Reaktionsdauer hängt beispielsweise von der Wärmeabführung, d.h. dem Rühr- und Kühlsystem, und der gewünschten Monomerkonzentration während der Polymerisation sowie dem Katalysatorsystem ab. Im allgemeinen ist die Polymerisation beendet, wenn keine merkliche Wärmeentwicklung mehr feststellbar ist und die Vinylacetatmonomerkonzentration vorzugsweise unter 1,5 Gewichtsprozent abgesunken ist.

Nach 10 bis 20 Stunden ist die Polymerisation Im allgemeinen beendet. Danach wird das Reaktionsgemisch durch Zugabe von zusätzlichem Katalysator und durch Erwärmen nachpolymerisiert bis der Vinylacetatgehalt unter 0,5 Gewichtsprozent liegt. Dazu sind im allgemeinen Katalysatormengen von 0,005—0,1 Gewichtsprozent, vorzugsweise 0,01—0,04 Gewichtsprozent, bezogen auf die Dispersion des Oxidationsmittels und des Reduktionsmittels, notwendig.

Die erfindungsgemäßen Dispersionen können vielseitig verwendet werden. Sie zeigen Pigmentstabilität und eignen sich hervorragend als Bindemittel in Dispersionsfarben. Die verhältnismäßig gute Flammfestigkeit, das hohe Bindevermögen und die hohe Verseifungsfestigkeit ermöglichen den Einsatz der Dispersionen als Bindemittel in hydraulisch abbindenden Baustoffen, außerdem zeigen sie hohe Klebefestigkeit und Wasserfestigkeiten bei der Verwendung in Klebemitteln. In Verbindung mit dreiwertigen sauer hydrolysierenden Metallsalzen ergeben sich günstige Topfzeiten und Wasserfestigkeiten. Das gleiche gilt auch in Verbindung mit starken Protonsäuren, wie z.B. Phosphorsäure,, Schwefelsäure und Sulfonsäuren, Salzsäure. Die Härterzusätze werden bei Salzen in Form ihrer konzentrierten wäßrigen Lösung, bei Salzen (20 bis 70 Gew.-%ig), bei Protonsäuren (10 bis 50 Gew.-%ig) in Mengen von 2 bis 10 Volumenprozent zur Dispersion gegeben.

Die Eigenschaften der Dispersionen bei der Verwendung in Holzverklebungen unter Zusatz von dreiwertigen anorganischen Salzen, wie beispielsweise Chromnitrat bzw. Aluminiumnitrat, wurden entsprechend der DIN 68603 geprüft. Nach dem höchsten Beanspruchungsklassen dieser Norm wird die Klebfestigkeit nach längerer Kaltwasserlagerung bzw. längerer Kochendwasserlagerung (Lagerungsfolge Nr. 9 der Norm = B4/9) beurteilt. Eine weitere wichtige Größe, die die Verwendungseigenschaften von Dispersionsklebstoffen in Kombination mit anorganischen Salzen beschreibt, ist die Topfzeit. Diese soll für den Einsatz in bestimmten Klebstoffauftragsaggregaten länger als eine Woche sein. Diese Bedingungen werden von den in Kombination mit Härterzusätzen verwendeten Klebstoffen teilweise sogar erheblich überschritten.

Bei der Anwendung der erfindungsgemäßen Dispersion als Bindemittel in hydraulisch abbindenden Baustoffen und in Anstrichmitteln ist es üblich, Emulgatoren in Mengen von 0,05 bis 1,5 Gewichtsprozent den Dispersionen beizumischen. Geeignete nichtionische Emulgatoren sind u.a. aliphatische Äther von Polyoxyäthylen, wie z.B. Polyoxyäthylenlauryläther, -oleyläther und -alkylaryläther, Polyoxyäthylenoctylphenyläther, -nonylphenyläther. Außerdem eignen sich Ester und Amide, wie beispielsweise Polyoxyäthylen-laurat, -oleat, -isononat, N-Polyoxyäthylenlauramid. Auch Blockpolymere des Äthylen- und Propylenoxids können mitverwendet werden. Ebenso ist es häufig vorteilhaft, Entschäumer in Mengen von 0,05 bis 0,3 Gewichtsprozent der Wirksubstanz mitzuverwenden.

Bei Verwendung der Dispersionen als Anstrichmittel werden wie beiden Klebstoffen saure Salze oder auch starke Protonsäuren zugesetzt. Dadurch resultiert ein wasserfester Anstrich. Solch saure Salze sind beispielsweise dreiwertige Metallsalze der Haupt- und Nebengruppe des periodischen Systems der Elemente mit starken Protonsäuren. Bevorzugte Härter in diesem Zusammenhang sind saure Phosphate, Phosphorsäure, Aluminiumnitrat und Chrom(III)nitrat. Diese Anstrichmittel aus

3

Dispersion und Härter weisen günstige Topfzeiten auf und wirken z.B. auf Eisen korrosionshemmend bei ausgezeichneter Haftung. Auch hier werden die Härter bei Salzen in Form ihrer konzentrierten wäßrigen Lösung bzw. die Protonsäuren in halbkonzentrierter Form in Mengen von 2 bis 8 Gewichtsprozent zur Dispersion gegeben.

Als Mörtelbindemittel wir ein anorganisch, abbindendes Material wie hydraulischer Zement, Portlandzement, Naturzement (Romanzement) oder Tonerdezement verwendet. Überliche Zementzusätze wie Gips, Gipsmörtel, Calciumphosphat, Kalk oder andere derartige calciumhaltige Bindemittel, Magnesiumoxychlorid, Magnesit oder andere magnesiumhaltige oder Oxysalzmassen oder andere ähnliche abbindende anorganische Substanzen, wie sie als Bindemittel für nicht-modifizierte Beton- und Mörtelmassen verwendet werden, können gegebenenfalls zugesetzt werden. Als übliche Zuschlagsmaterialien werden Sand, Steine, Beton, Schotter, Kies, Granit, Carborundum, Aluminiumoxid, Schmirgel, Marmorbruch, Sägespäne, Schlacke, Asbest, Glimmer, Talkum, Flintsteine oder Kunstprodukte wie z.B. gepulverte Keramikmaterialien eingesetzt.

Bei der Verwendung der Dispersionen in Anstrichsmitteln kann den Latexüberzugsmassen z.B. (verkappte) Polyisocyanate, wasserkondensierbare Harnstofformaldehyde- oder wärmehärtbare Melaminformaldehydharze zugesetzt werden. Ebenso können Pigmente wie beispielsweise Tone, Aluminiumsilicate, Calciumcarbonat, Magnesiumcarbonat, Glimmer, Talkum, Diatomeenerde oder Titanoxid, Zinkphosphate, Zinkchromate, Eisenoxid, Chromoxid zugesetzt werden. Dabei können alkalisch reagierende und carbonathaltige Produkte selbstverständlich nur zugeschlagen werden, wenn keine sauren Härter zugesetzt werden. Viele andere, dem Fachman bekannte Verarbeitungshilfsstoffe wie Verdickungsmittel, Koaleszenzhilfsmittel, Füllstoffe und Verstärkungsmittel, Weichmacher, Verlaufmittel und Streckmittel, Antioxidantien und Stabilisatoren, Fungizide können ebenso mitverwendet werden. Die Anstrichmittel eignen sich als Schutz- oder Dekorationsüberzüge von beispielsweise Metall, Holz oder mineralischen Oberflächen.

Auch bei der Verwendung der Dispersionen in wasserfesten Klebstoffen werden gelegentlich Füllstoffe zugegeben. Genannt seien Leichtspat, Schwerspat und andere mineralische Stoffe, die nicht alkalisch reagieren und keine Carbonatgruppe enthalten. In gewissen Fällen werden Schutzkolloide, insbesondere Polyvinylalkohol nachträglich zugegeben. Als weitere mögliche Zusatzstoffe seien Konservierungsmittel, Farbstoffe, Weichmacher, Verfilmungshilfsmittel und Verdickungsmittel erwähnt. Als Weichmacher seien beispielsweise Butyldiglycolacetat, Acetylrizinolbutylester, Diester der Oxalsäure, Bernsteinsäure, Adipinsäure, Phthalsäure mit aliphatischen, verzweigten oder unverzweigten Alkoholen mit 2—16 Kohlenstoffatomen, wie z.B. Oxalsäuredibutylester, Bernsteinsäuredibutylester, Diisobutylphthalat, Dioctylphthalat, Diisotridecylphthalat sowie Glykole, wie z.B. Äthylenglykol, Hexamethylenglykol, ferner Benzylalkohol und Ester-Alkoholgemische, Diphenoxyphenylformal. Ebenso können organische Lösungsmittel in Form von aromatischen Kohlenwasserstoffen bzw. aliphatischen Kohlenwasserstoffen zugesetzt werden.

### Beispiel 1

400 g Polyvinylalkohol mit der Verseifungszahl 60 und einer Höpplerviskosität von 13 m Pa.s (einer 4 Gew.-%igen wäßrigen Lösung bei 20°C) werden zusammen mit 40 g Kaliumpersulfat in 2,4 l Wasser gelöst. Unter Rühren und bei einer Polymerisationstemperatur von 30°C wird eine Mischung von 4,2 kg Vinylchlorid und 0,8 kg Vinylacetat kontinuierlich zudosiert. Während der gesamten Polymerisationszeit wird der Äthylendruck bei 50 bar konstant gehalten. Die Polymerisation wurde durch Zugabe von einer 1 %igen Natriumformaldehydsulfoxylatlösung gestartet und durch weiteren Zusatz von Reduktionsmittel gesteuert. Insgesamt war der Verbrauch an Reduktionsmittel der genannten Konzentration 770 g (7,7 g Reduktionsmittel 100 %ig). Nach 15 Stunden war die Polymerisation beendet. In der Nachpolymerisationsphase wurden erneut.

| | |
|---|---|
| 2,67 g Rongalit®C, gelöst in 15 ml Wasser (Natriumhydroxymethansulfinat) | (= 0,02 Gew.-% auf Dispersion) |
| 2,67 t-Butylhydroperoxid zugesetzt | (= 0,02 Gew.-% auf Dispersion) |

Die erhaltene Dispersion hat einen Feststoffgehalt von 51,8 Gewichtsprozent, eine Viskosität, gemessen im Epprecht Rheometer Stufe C III von 5900 m Pa.s und eine Mindestfilmbildungstemperatur von 20°C. Die Dispersion ist frost-, pigment- und scherstabil und hat gute Festigkeitswerte. Nach Zugabe von 2 Gewichtsprozent Butyldiglycolacetat zur Dispersion betrug die Reißfestigkeit des Filmes ca. 12,5 N/mm² bei einer Bruchdehnung von ca. 350%. Die Prüfung von Holzverklebungen mit einem Gemisch der Dispersion mit 5 Gewichtsprozent einer 40 Gew.-%igen, hergestellt aus 70 Gewichtsteilen des kristallwasserhaltigen (9 $H_2O$)-Salzes in 30 Gewichtsteilen Wasser, wäßrigen Lösung von Chrom(III)nitrat ergab nach der DIN 68603 die folgenden Klebfestigkeiten:

# 0 000 590

Lgf. (Lgf = Lagerungsfolge der DIN 68603) Nr. 5         2,7 N/mm²

Lgf. Nr. 9         4,0 N/mm²

Bei der Verwendung der Dispersion als Betonzusatzmittel unter Mitverwendung eines üblichen Entschäumers in einer Menge von 0,1 Gewichtsprozent, bezogen auf die Dispersion, ergeben sich die in der Tabelle aufgeführten Werte. Der Entschäumer besteht aus 94 Gewichtsprozent Dimethylsiloxan mit einer Viscosität über 20 Centistokes bei 25°C, 6 Gewichtsprozent Siliciumdioxid in feinverteilter Form. Bei einem Kunststoff/Zementfaktor von 0,05 und einem Wasser/Zementfaktor von 0,48 werden die folgenden Werte ermittelt:

| | 28 d Normal-klima | 28 d unter Wasser | Wasser und 21 d Normal-klima | Normal-klima 7 d unter Wasser |
|---|---|---|---|---|
| Biegezugfestig-keit N/mm² | 9,7 | 9,2 | 9,0 | 6,5 |
| Druckfestigkeit N/mm² | 46,5 | 48,0 | 57,8 | 36,0 |

### Beispiel 2

Je 275 g eines Polyvinylalkohols mit einer Verseifungszahl um 70 und Viskositäten von 13 bzw. 6 m Pa.s werden zusammen mit dem Katalysator wie in Beispiel 1 im Wasser gelöst. Bei gleichen Verfahrensbedingungen wie in Beispiel 1, lediglich mit dem Unterschied, daß gleichzeitig mit der Vinylchlorid — Vinylacetatdosierung eine Lösung von 50 g N-Methylolacrylamid in 100 ccm Wasser/Methanol (1:1) zudosiert werden.

Man erhält Dispersion mit einem Feststoffgehalt von 51,7 Gewichtsprozent, einer Viskosität (Rheometer Stufe C III) von 4930 m Pa.s und einer Mindestfilmbildungstemperatur von 15°C. Sie ist frost-, pigment- und scherstabil und hat gute Festigkeitswerte. die Prüfung nach DIN 68603 als Klebstoff unter Zusatz von Chrom(III)nitrat (der in Beispiel 1 genannten Menge) ergab

Lgf. Nr. 9 4,1 N/mm²

### Beispiel 3

Bei Verfahrensbedingungen wie in Beispiel 2, jedoch unter Verwendung der doppelten Menge N-Methylolacrylamid und 440 g einer Mischung von Polyvinylalkohol mit einer Verseifungszahl von 140. 140 g davon weisen eine Höpplerviskosität von 13 und 300 g von 5 m Pa.s. auf.

Die so hergestellte Dispersion ist frost-, pigment- und scherstabil, hat einen Festgehalt von 53,2 Gewichtsprozent und eine Viskosität gemessen im Epprecht Rheometer (Stufe C III) von 11700 m Pa.s.

Folgende Werte wurden bei der Prüfung der Klebfestigkeit nach DIN 68603 erhalten. Bei Zusatz von Chromnitrat (5 Gewichtsprozent der Dispersion einer 70 %igen wäßrigen Lösung)
Lgf. Nr. 5    4,8 N/mm²
Lgf. Nr. 9    4,9 N/mm²

Aluminiumnitrat (5 Gewichtsprozent einer 70 %igen wäßrigen Lösung. Die Konzentrationsangabe besagt: 70 %ig berechnet auf das kristallwasserhaltige Sole mit 9 Kristallwasser).
Lgf. Nr. 5    3,6 N/mm²
Lgf. Nr. 9    4,0 N/mm²

### Beispiel 4

Bei sonst gleicher Verfahrensweise wie in Beispiel 3 wird unter Verwendung von Polyvinylalkohol mit einer Verseifungszahl von 20 gearbeitet. Die Höpplerviskositäten der eingesetzten Polyvinylalkohole ist 13 bzw. 5 m Pa.s.

Die Prüfung der Klebfestigkeit nach DIN 68603 ergab unter Verwendung von Chrom(III)nitrat (in der in Beispiel 1 genannten Menge)
Lgf. Nr. 5    4,4 N/mm²
Lgf. Nr. 9    5,4 N/mm²

### Beispiel 5

440 g eines Polyvinylalkohols mit einer Verseifungszahl von 140 und einer Höpplerviskosität von 5 m Pa.s werden zusammen mit 40 g Kaliumpersulfat in Wasser gelöst und auf ca. 37°C erwämt. Nun werden eine Mischung von 4,2 kg Vinylchlorid und 0,8 kg Vinylacetat innerhalb 5 Stunden kontinuier-

# 0 000 590

lich eindosiert. Während dieser Zeit werden der Äthylendruck auf 50 bar gehalten und 175 g N-Methylolacrylamid in wäßrig/methanolischer Lösung eindosiert.

Die Reaktion wird durch Zugabe von Formaldehydnatriumsulfoxylat gesteuert. Nach 14 Stunden ist die Polymerisation abgeschlossen, das Produkt wird mit Ammoniak auf pH 7 eingestellt, entspannt, nachpolymerisiert und entgast.

Die erhaltene Dispersion hat einen Festgehalt von 52,5, eine Viskosität (Rheometer C III) von 2500 m Pa.s und eine Mindestfilmbildungstemperatur von 20°C. Sie ist scher-, pigment- und froststabil und weist im unvermetzten Zustand eine Reißfestigkeit von 18 N/mm² bei einer Bruchdehnung von ca. 290% auf.

Die Prüfung nach DIN 68603 ergibt bei Verwendung von Chromnitrat

Lgf. Nr. 5    6,2 N/mm²
Lgf. Nr. 9    6,2 N/mm²
Aluminiumnitrat:
Lgf. Nr. 9    4,8 N/mm²

Ein nachträgliche Zugabe von 1 Gewichtsprozent Polyvinylalkohol auf Dispersion verändert diese Werte unwesentlich.
Chromnitrat:
Lgf. Nr. 5    5,8 N/mm²
Lgf. Nr. 9    6,1 N/mm²
Aluminiumnitrat:
Lgf. Nr. 9    4,9 N/mm²
Die Topfzeit beträgt über 20 Tage.
5% 25 Gew.-%iger Phosphorsäure:
Lgf. Nr. 9    4,5 N/mm²
Topfzeit: über
14 Tage
5% 25 Gew.-%iger Schwefelsäure:
Lgf. Nr. 9    4,0 N/mm²
Topfzeit: über
14 Tage

## Beispiel 6

Die Durchführung der Polymerisation geschieht ganz analog von Beispiel 3, jedoch wurde ein Polyvinylalkohol mit der Verseifungszahl 200 eingesetzt.

Der Festgehalt der Dispersion beträgt 52,9 Gewichtsprozent, die Viskosität (Rheometer C III) 7300 m Pa.s und die Mindestfilmbildungstemperatur 25°C. Die pigment- und schwerstabile Dispersion hat einen K-Wert von 63.

Die Prüfung nach DIN 68603 ergab bei Zusatz von Chromnitrat (in der Beispiel 1 genannten Menge)

Lgf. Nr. 5    5,6 N/mm²
Lgf. Nr. 9    6,4 n/mm²
Aluminiumnitrat:
(Menge wie in Beispiel 3)
Lgf. Nr. 5    4,6 N/mm²
Lgf. Nr. 9    5,0 N/mm²

## Beispiel 7

Im Vergleich zum Versuch 5 werden folgende Änderungen durchgeführt:
1) Reaktionstemperatur: 30°C
2) N-Methylolacrylamid: 210 g

Der Festgehalt der Dispersion beträgt 54,1 Gewichtsprozent, die Viskosität (Rheometer C III) 4750 m Pa.s und die Mindestfilmbildungstemperatur 18°C. Sie ist frost-, pigment- und scherstabil.
Die Prüfung nach DIN 68603 ergab mit
Chromnitrat
Lgf. Nr. 5    6,2 N/mm²
Lgf. Nr. 9    6,0 N/mm²
Aluminiumnitrat
Lgf. Nr. 5    5,4 N/mm²
Lgf. Nr. 9    4,5 N/mm²

## Beispiel 8

Im Vergleich zu Beispiel 5 werden folgende Änderungen durchgeführt:
1) Reaktionstemperatur: 40—45°C
2) N-Methylolacrylamid: 230 g (4 Gewichtsprozent)
Der Festgehalt der Dispersion beträgt 53,1 Gewichtsprozent, die Viskosität (Rheometer C III)

6

2800 m Pa.s und die Mindestfilmbildungstemperatur 14°C. Sie ist frost-, pigment- und scherstabil.
Die Prüfung nach DIN 68603 ergab mit Chromnitrat:
Lgf. Nr. 5    5,6 N/mm²
Lgf. Nr. 9    5,6 N/mm²; die Topfzeit betrug 25 Tage

### Beispiel 9/10

Ein Ersatz imn Beispiel 8 von N-Methylolcarylamid durch die entsprechenden Methoxy- bzw. Isobutoxyäther erbrachte keine signifikante Änderung der Dispersionseigenschaften.

### Beispiel 11

Im Vergleich zu Beispiel 5 wurder folgende Änderung durchgeführt:
1) Reaktionstemperatur 40°C
2) N-Methylolacrylamid 420 g
Der Festgehalt der Dispersion beträgt 53,9 Gewichtsprozent, die Viskosität (Rheometer C III) 3400 m Pa.s und die Mindestfilmbildungstemperatur 16°C.
Die Prüfung nach DIN 68603 ergab mit Aluminiumnitratzusatz:
Lgf. Nr. 5    5,1 N/mm²
Lgf. Nr. 9    4,9 N/mm²

### Beispiel 12

Die Durchführung der Polymerisation geschieht analog Beispiel 5, jedoch werden statt 175 g N-Methylolacrylamid 175 g N-Methylolallylcarbamat einpolymerisiert.
Das Produkt weist einen Festgehalt von 51,4 Gewichtsprozent, eine Viskosität (Rheometer C III) von 2100 m Pa.s und eine Mindestfilmbildungstemperatur von 19°C auf. Sie ist frost-, pigment- und scherstabil.
Die Prüfung nach DIN 68603 ergibt bei Zusatz von Chromnitrat:
Lgf. Nr. 5    6,0 N/mm²
Lgf. Nr. 9    5,7 N/mm²
Aluminiumnitrat:
Lgf. Nr. 5    5,2 N/mm²
Lgf. Nr. 9    4,5 N/mm²

### Patentansprüche

1. Wäßrige Vinylchlorid-Copolymerdispersionen mit Feststoffgehalten zwischen 30 und 70 Gewichtsprozent, enthaltend Copolymere aus
50—85 Gewichtsprozent Vinylchlorideinheiten
  5—35 Gewichtsprozent Vinylacetateinheiten und
  5—30 Gewichtsprozent Äthyleneinheiten,
dadurch gekennzeichnet, daß die Dispersion 2 bis 15 Gewichtsprozent eines oder mehrerer Polyvinylalkohole, bezogen auf die Dispersion, mit Verseifungszahlen zwischen 20 und 240 und Polymerisationsgraden zwischen 300 und 2000 enthält und daß die Copolymeren in Abwesenheit von Emulgatoren und Monorneren mit stark polaren Gruppen hegestellt worden sind.

2. Wäßrige Vinylchlorid-Copolymerdispersionen nach Anspruch 1, dadurch gekennzeichnet, daß zusätzlich 0,5 bis 5 Gewichtsprozent Einheiten olefinisch ungesättigter N-Methylolamide einpolymerisiert sind.

3. Verfahren zur Herstellung von Vinylchlorid-Copolymerdispersionen nach Anspruch 1 durch Polymerisation in wäßrigem Medium bei Temperaturen zwischen +10 und +85°C unter Verwendung von 0,01 bis 3 Gewichtsprozent Redoxkatalysatorsysteme unter Rühren und Nachpolymerisation unter Zugabe weiterer 0,005 bis 0,1 Gewichtsprozent der jeweiligen Komponenten des Redoxkatalysatorsystems, dadurch gekennzeichnet, daß bezogen auf den Gesamtfestoffgehalt der Dispersion
50—85 Gewichtsprozent Vinylchlorid
  5—35 Gewichtsprozent Vinylacetat und gegebenenfalls 0,5 bis 5 Gewichtsprozent eines olefinisch ungesättigten N-Methylolamids bei konstanten Äthylendrücken zwischen 20 und 150 bar in Gegenwart von 2 bis 15 Gewichtsprozent eines oder mehrerer Polyvinylalkohole mit Verseifungszahlen zwischen 20 und 240 und Polymerisationsgraden zwischen 300 und 2000 in Abwesenheit von Emulgatoren und Monomeren mit stark polaren Gruppen bei Monomerkonzentrationen der flüssigen Monomeren während der Monomerdosierung zwischen 5 und 20 Gewichtsprozent polymerisiert wird.

4. Verwendung der Dispersionen nach Anspruch 1 bis 2 als Bindemittel in hydraulisch abbindenden Baustoffen.

5. Verwendung der Dispersionen nach Anspruch 1 bis 2 in Kombination mit sauren Härterzusätzen in Klebstoffen.

6. Verwendung der Dispersionen nach Anspruch 1 bis 2 in Kombination mit Aluminiumnitrat, Chromnitrat, sauren Phosphaten oder Phosphorsäure als Härterzusätze in Anstrichmitteln.

# 0 000 590

## Claims

1. Aqueous vinyl chloride copolymer dispersions having solids contents of between 30 and 70% by weight, containing copolymers comprising

50—85% by weight of vinyl chloride units,
5—35% by weight of vinyl acetate units, and
5—30% by weight of ethylene units,

characterized in that said dispersion further contains 2 to 15% by weight, based on the dispersion, of one or more polyvinyl alcohols having a saponification number of between 20 and 240 and a polymerization degree of between 300 and 2000, and that said copolymers were manufactured in the absence of emulsifiers and monomers having highly polar groups.

2. Aqueous vinyl chloride copolymer dispersions according to claim 1, characterized in that 0.5 to 5% by weight of units of olefinically unsaturated N-methylolamides are additionally copolymerized.

3. Process for the production of vinyl choride copolymer dispersions according to claim 1 by polymerization in an aqueous medium at temperatures of between +10 and +85°C using 0.01 to 3% by weight of redox catalyst systems while stirring, and by post-polymerization with the addition of a further 0.005 to 0.1% by weight of the respective components of the redox catalyst system, characterized in that, calculated on the total solids content of the dispersion,

50—85% by weight of vinyl chloride,
5—35% by weight of vinyl acetate and, optionally,
0.5—5% by weight of an olefinically unsaturated N-methylolamide are polymerized at a constant ethylene pressure of between 20 and 150 bar in the presence of 2 to 15% by weight of one or more polyvinyl alcohols having a saponification number of between 20 and 240 and a polymerization degree of between 300 and 2000 in the absence of emulsifiers and monomers having highly polar groups, at monomer concentrations of the liquid monomers during metering in of the monomers of between 5 and 20% by weight.

4. Use of the dispersions according to claims 1 to 2 as binders in hydraulically setting building materials.

5. Use of the dispersions according to claims 1 to 2 in combination with acidic hardener additives in adhesives.

6. Use of the dispersions according to claims 1 to 2 in combination with aluminium nitrate, chromium nitrate, acidic phosphates or phosphoric acid as hardener additives in coating agents.

## Revendications

1. Dispersions aqueusesde copolymères du chlorure de vinyle ayant des teneurs en matières solides comprises entre 30 et 70% en poids et renfermant des copolymères constitués:

de 50 à 85% en poids motifs de chlorure de vinyle,
de  5 à 35% en poids motifs d'acétate de vinyle et
de  5 à 30% en poids de motifs d'éthylène,

dispersions caractérisées en ce qu'elles contiennent de 2 à 15% en poids, par rapport à la dispersion, d'un ou de plusieurs alcools polyvinyliques ayant des indices de saponification de 20 à 240 et des degrés de polymérisation de 300 à 2000, et en ce que les copolymères ont été préparés en l'absence d'émulsionnants et de monomères à groupes très polaires.

2. Dispersions aqueuses de copolymères du chlorure de vinyle selon la revendication 1, caractérisées en ce que les copolymères contiennent en outre de 0,5 à 5% en poids de motifs, incorporés par polymérisation, de N-méthylolamides éthyléniques.

3. Procédé de préparation de dispersions de copolymères du chlorure de vinyle selon la revendication 1, par polymérisation en milieu aqueux à des températures comprises entre +10 et +85°C, en présence de 0,01 à 3% en poids de systèmes catalytiques rédox, tout en agitant, et polymérisation complémentaire avec addition supplémentaire de 0,005 à 0,1% en poids des composantes du système catalytique rédox, procédé caractérisé en ce qu'on polymérise, par rapport à la teneur totale en matières solides de la dispersion:

de 50 à 85% en poids de chlorure de vinyle,
de  5 à 35% en poids d'acétate de vinyle et éventuellement
de 0,5 à   5% en poids d'un N-méthylolamide éthylénique, sous des pressions constantes d'éthylène comprises entre 2 et 15 MPa, en présence de 2 à 15% en poids d'un ou plusieurs alcools polyvinyliques ayant des indices de saponification de 20 à 240 et des degrés de polymérisation de 300 à 2000, en l'absence d'émulsionnants et de monomères à groupes très polaires, les concentrations des monomères liquides au cours de l'introduction continue de monomères étant comprises entre 5 et 20% en poids.

4. Application des dispersions selon l'une des revendications 1 et 2 comme liants dans des matériaux de construction à prise hydraulique.

5. Application des dispersions selon l'une des revendications 1 et 2 en association avec des additifs durcisseurs acides dans des colles.

6. Application des dispersions selon l'une des revendications 1 et 2 en association avec le nitrate d'aluminium, le nitrate de chrome, des phosphates acides ou l'acide phosphorique comme additifs durcisseurs dans des peintures.